# EUROPEAN PATENT APPLICATION

(11) **EP 4 801 145 A1**
(43) Date of publication of application: **02.09.2026**
(21) Application number: 24881420.4
(22) Date of filing: 10.10.2024
(51) Int. Cl.: H04W 72/0446

(54) **DOWNLINK DATA TRANSMISSION METHOD AND APPARATUS, AND DEVICE AND STORAGE MEDIUM**

(30) Priority: 27.10.2023 CN 202311415651
(71) Applicant: Datang Mobile Communications Equipment Co., Ltd., Beijing 100085 (CN)
(72) Inventor: GUAN, Juan, Beijing 100085 (CN)
(74) Representative: Ipsilon
(86) International application number: PCT/CN2024/123903
(87) International publication number: WO 2025/087054

(57) **Abstract**

The present disclosure relates to a method for transmitting downlink data, apparatus, device, and storage medium. In the present disclosure, a base station sends first indication information to a terminal to indicate whether the terminal performs coverage enhancement. If coverage enhancement is required, the base station sends second indication information to the terminal, and transmits downlink data to the terminal according to the second indication information. The method enables the terminal to receive downlink data from time slots based on the repetition number of the downlink data and/or the number of time slots for transmitting the downlink data indicated by the second indication information. Since the same downlink data is transmitted in multiple time slots, it can improve demodulation performance by reducing the code rate. In addition, the terminal combines multiple repetitions of downlink data received on different time slots, which improves the success rate of downlink data reception at the terminal, avoids transmission delay caused by retransmission, and enhances the downlink data transmission efficiency of the satellite communication system.

## Description

The present disclosure claims priority to the Chinese patent application filed with the CNIPA on October 27, 2023, with application number 202311415651.2 and title "Method for Transmitting Downlink Data, Apparatus, Device, and Storage Medium", the entire content of which is incorporated herein by reference in the present disclosure.

### TECHNICAL FIELD

The present disclosure relates to the field of communication technologies, and in particular, to a method for transmitting downlink data , apparatus, device, and storage medium.

### BACKGROUND

With the development of 5G wireless mobile communication technologies, various fields have begun to adopt 5G wireless mobile communication technologies. For example, taking satellite communication as an instance, the combination of satellite communication and 5G wireless mobile communication technologies may be a future development trend.

Due to the poor link budget of the satellite communication system, the transmission failure probability is relatively high. For instance, the probability that a terminal successfully receives downlink data is low. Moreover, the long distance between the base station and the terminal results in large transmission delay. Retransmission performed when the terminal fails to successfully receive the downlink data will seriously degrade transmission efficiency.

### SUMMARY

To address the above technical issues, in a first aspect, the embodiments of the present disclosure provides a method for transmitting downlink data. The method includes:
sending first indication information to a terminal, wherein the first indication information is configured to indicate whether coverage enhancement is required;
generating second indication information in the case that the coverage enhancement is required, wherein the second indication information is configured to indicate a repetition number of the downlink data and/or a number of time slots for transmitting the downlink data, the number of time slots being greater than or equal to 2;
sending the second indication information to the terminal;
sending the downlink data to the terminal according to the repetition number of the downlink data and/or the number of time slots for transmitting the downlink data.

In a second aspect, the embodiments of the present disclosure provides a method for transmitting downlink data. The method includes:
receiving first indication information sent by a base station in a satellite communication system, wherein the first indication information is configured to indicate whether coverage enhancement is required;
receiving second indication information sent by the base station in the case that the coverage enhancement is required, wherein the second indication information is configured to indicate a repetition number of the downlink data and/or a number of time slots for transmitting the downlink data, the number of time slots being greater than or equal to 2;
receiving the downlink data according to the second indication information.

In a third aspect, the embodiments of the present disclosure provides an apparatus for transmitting downlink data. The apparatus includes:
a first sending module, configured to send first indication information to a terminal, wherein the first indication information is configured to indicate whether coverage enhancement is required;
a generating module, configured to generate second indication information in the case that the coverage enhancement is required, wherein the second indication information is configured to indicate a repetition number of downlink data and/or a number of time slots for transmitting the downlink data, the number of time slots being greater than or equal to 2;
a second sending module, configured to send the second indication information to the terminal;
a third sending module, configured to send the downlink data to the terminal according to the repetition number of the downlink data and/or the number of time slots for transmitting the downlink data.

In a fourth aspect, an apparatus for transmitting downlink data. The apparatus includes:
a first receiving module, configured to receive first indication information sent by a base station in a satellite communication system, wherein the first indication information is configured to indicate whether coverage enhancement is required;
a second receiving module, configured to receive second indication information sent by the base station in the case that the coverage enhancement is required, wherein the second indication information is configured to indicate a repetition number of the downlink data and/or a number of time slots for transmitting the downlink data, the number of time slots being greater than or equal to 2;
a third receiving module, configured to receive the downlink data according to the second indication information.

In a fifth aspect, the embodiments of the present disclosure provides a base station. The base station includes:
a memory;
a processor; and
a computer program;
wherein the computer program is stored in the memory and configured to be executed by the processor to implement the method according to the first aspect.

In a sixth aspect, the embodiments of the present disclosure provides a terminal. The terminal includes:
a memory;
a processor; and
a computer program;
wherein the computer program is stored in the memory and configured to be executed by the processor to implement the method according to the second aspect.

In a seventh aspect, the embodiments of the present disclosure provides a computer-readable storage medium, wherein the computer-readable storage medium may store a program that, when executed, may implement part or all of the steps in each implementation manner provided by the first aspect or the second aspect of the present disclosure.

Compared with the related art, the above technical solutions provided by the embodiments of the present disclosure have the following advantages:
In the method for transmitting downlink data, apparatus, device, and storage medium provided by the embodiments of the present disclosure, a base station send first indication information to a terminal to indicate whether the terminal performs coverage enhancement. When coverage enhancement is required, the base station generates second indication information to indicate a repetition number of downlink data and/or a number of time slots for transmitting the downlink data, wherein the number of time slots is greater than or equal to 2. The repetition number of downlink data enables the base station to transmit the downlink data repeatedly, and the number of time slots for transmitting the downlink data enables the same downlink data to be transmitted in multiple time slots. Further, the base station sends the second indication information to the terminal, and transmits the downlink data to the terminal according to the repetition number of the downlink data and/or the number of time slots for transmitting the downlink data, which can enable the downlink data being transmitted repeatedly and/or the same downlink data being transmitted in multiple time slots. When the terminal determines that coverage enhancement exists according to the first indication information, the terminal receives the downlink data from corresponding time slots based on the repetition number of the downlink data and/or the number of time slots for transmitting the downlink data indicated in the second indication information. Since the same downlink data is transmitted in multiple time slots, i.e., different parts of the downlink data are transmitted on different time slots, the demodulation performance of the terminal for the downlink data is improved by reducing the code rate, thereby helping to improve the transmission efficiency of the downlink data. In addition, the base station transmits the downlink data repeatedly, so that the terminal combines multiple repeated downlink data received on different time slots, which improves the success rate of the terminal in receiving the downlink data, avoids transmission delay caused by retransmission, and improves the downlink data transmission efficiency of the satellite communication system.

It should be understood that the above general description and the following detailed description are exemplary and explanatory only and do not limit the present disclosure.

### BRIEF DESCRIPTION OF THE DRAWINGS

The accompanying drawings here are incorporated into the specification and constitute a part of the specification, illustrate embodiments consistent with the present disclosure, and together with the description, serve to explain the principles of the present disclosure.

To more clearly illustrate the technical solutions in the embodiments of the present disclosure or in the prior art, the accompanying drawings used in the description of the embodiments or the prior art will be briefly introduced below. Obviously, for those of ordinary skill in the art, other drawings can be obtained based on these drawings without creative efforts.
FIG. 1 is a flowchart of a method for transmitting downlink data provided by an embodiment of the present disclosure;
FIG. 2 is a schematic diagram of an application scenario provided by an embodiment of the present disclosure;
FIG. 3 is a correspondence between transmission blocks and time slots provided by an embodiment of the present disclosure;
FIG. 4 is a schematic diagram of bits provided by an embodiment of the present disclosure;
FIG. 5 is a flowchart of a method for transmitting downlink data provided by an embodiment of the present disclosure;
FIG. 6 is a flowchart of a method for transmitting downlink data provided by an embodiment of the present disclosure;
FIG. 7 is a schematic diagram of a monitoring window corresponding to SSB in the related art;
FIG. 8 is a flowchart of a method for transmitting downlink data provided by an embodiment of the present disclosure;
FIG. 9 is a structural schematic diagram of an apparatus for transmitting downlink data provided by an embodiment of the present disclosure;
FIG. 10 is a structural schematic diagram of an apparatus for transmitting downlink data provided by an embodiment of the present disclosure;
FIG. 11 is a structural schematic diagram of a terminal provided by an embodiment of the present disclosure;
FIG. 12 is a structural schematic diagram of a base station provided by an embodiment of the present disclosure.

### DETAILED DESCRIPTION

To make the objectives, technical solutions and advantages of the embodiments of the present disclosure clearer, the technical solutions in the embodiments of the present disclosure will be clearly and completely described below. Obviously, the described embodiments are part of the embodiments of the present disclosure, rather than all of the embodiments. Based on the embodiments in the present disclosure, all other embodiments obtained by those of ordinary skill in the art without creative efforts shall fall within the protection scope of the present disclosure.

With the development of 5G wireless mobile communication technologies, various fields have begun to adopt 5G wireless mobile communication technologies. For example, taking satellite communication as an instance, the combination of satellite communication and 5G wireless mobile communication technologies may be a future development trend. Due to the poor link budget of the satellite communication system, the transmission failure probability is relatively high. For instance, the probability that a terminal successfully receives downlink data is low. Moreover, the long distance between the base station and the terminal results in large transmission delay. If retransmission is performed when the terminal fails to successfully receive the downlink data, the transmission efficiency will be seriously degraded.

In view of above problem, an embodiment of the present disclosure provides a method for transmitting downlink data, which is introduced below in conjunction with specific embodiments.

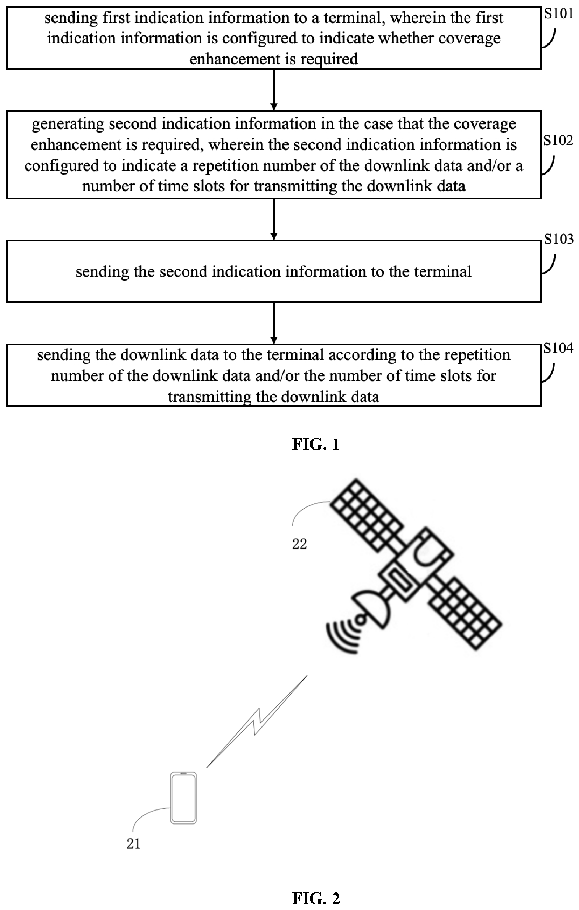

FIG. 1 is a flowchart of a method for transmitting downlink data provided by an embodiment of the present disclosure. The method may be applied to the application scenario shown in FIG. 2, which includes a terminal 21 and a base station 22. The base station 22 is specifically a base station in a satellite communication system; for example, the base station 22 may be carried on a satellite.Alternatively, in other embodiments, the satellite communication system includes a terminal, a satellite, and a gateway station (i.e., a base station), wherein the gateway station performs data processing, and the satellite may transparently forward data or information transmitted between the terminal and the gateway station. The terminal 21 and the base station 22 may constitute a satellite communication system. It should be understood that the satellite communication system is not limited to including a terminal and a base station, and may further include other network elements, such as a transit station, a relay station, and other devices. In addition, the present embodiment does not specifically limit the number of terminals and the number of base stations that may be included in the satellite communication system. The method described in the present embodiment may be executed by the base station 22. The method is introduced in detail below in conjunction with FIG. 2. As shown in FIG. 1, the specific steps of the method are as follows:
S101. Sending first indication information to a terminal, wherein the first indication information is configured to indicate whether coverage enhancement is required.

In the present embodiment, before sending downlink data to the terminal 21, the base station 22 may first determine whether coverage enhancement needs to be performed on the downlink data. In the case that coverage enhancement is required, the base station 22 sends the first indication information to the terminal 21 for indicating whether coverage enhancement is required through the first indication information.

For example, the communication network to which the method described in the embodiments of the present application is applicable may support terminals with multiple capabilities. The capabilities herein may include, but are not limited to, communication capability, computing capability, processing capability, and so on. For instance, the communication network supports terminals with three levels of capability: terminals with the weakest capability, terminals with weak capability, and terminals with strong capability. Here, weak capability and strong capability may be measured by a preset threshold. For example, a capability greater than the threshold indicates strong capability; a capability less than the threshold indicates weak capability.The weakest capability may be determined by sorting: for example, the capabilities of all terminals in the communication network are sorted in descending order, and the terminal ranked last is regarded as having the weakest capability.

In the present embodiment, the base station may determine whether coverage enhancement is required according to the capability of the terminal in the communication network. For example, coverage enhancement is required for terminals with the weakest capability and terminals with weak capability, whereas coverage enhancement is not required for terminals with strong capability.

It should be understood that the capability of the terminal is one factor for the base station to determine whether coverage enhancement is required. In other embodiments, there are other influencing factors when the base station determines coverage enhancement, such as the orbital altitude of the satellite, link conditions, G/T value, and so on, wherein, G represents antenna gain, T represents antenna noise temperature, and the G/T value is a major distinction among different terminals.

S102. Generating second indication information when the coverage enhancement is required, wherein the second indication information is configured to indicate a repetition number of the downlink data and/or a number of time slots for transmitting the downlink data, and the number of time slots is greater than or equal to 2.

In the present embodiment, the coverage enhancement includes TB processing over multi-slot (TBoMS) and/or Repetition. TB processing over multi-slot may be referred to as multi-slot transmission for short. The multi-slot transmission means transmitting the single transmission block (TB) in multiple time slots (slots), wherein the multiple time slots may be 2 or more time slots. Taking transmission of the single transmission block in 2 time slots as an example, the transmission block may be divided into two parts, namely a first part and a second part. The first part is transmitted in a first time slot, and the second part is transmitted in a second time slot, wherein the first time slot and the second time slot are two consecutive time slots. In addition, the number and position of Orthogonal Frequency-Division Multiplexing (OFDM) symbols occupied by the first part in the first time slot are the same as the number and position of OFDM symbols occupied by the second part in the second time slot, respectively. TBoMS can reduce the code rate of the satellite communication system under coverage limitation or narrow transmission bandwidth. For example, using two time slots to transmit one transmission block reduces the code rate by half compared with using one time slot to transmit one transmission block. Thus, data transmission at a lower code rate can be realized without changing the existing Modulation and Coding Scheme (MCS) table.

Assume that the transmission block includes downlink data, and the transmission block is carried on a Physical Downlink Shared Channel (PDSCH). Assume that the number of Resource Elements (REs) in one Physical Resource Block (PRB) allocated by the base station to the terminal for receiving the PDSCH is denoted by ${N}_{RE}^{′}$, and the total number of PRBs allocated by the base station to the terminal is n_{PRB}. If TBoMS is not used, the terminal receives the transmission block carried on the PDSCH via N_{RE} REs as shown in Formula (1) below. ${N}_{RE} = min \left(156, {N}_{RE}^{′}\right) ∗ {n}_{PRB}$

If TBoMS is used, the terminal receives the transmission block carried on the PDSCH via N_{RE} REs as shown in Formula (2) below. ${N}_{RE} = N ∗ min \left(156, {N}_{RE}^{′}\right) ∗ {n}_{PRB}$ wherein N indicates that a single transmission block is transmitted in N time slots, i.e., N represents the number of time slots used to transmit one transmission block.

In the present embodiment, an RE is the smallest resource unit in physical resources, occupying one OFDM symbol in the time domain and one subcarrier in the frequency domain.

Repetition refers to repeatedly transmitting a transmission block multiple times. For example, a single transmission block is transmitted in L time slots, wherein L is greater than or equal to 1. Taking L=2 as an example, time slot 1 may be used to transmit the transmission block, and time slot 2 may be used to transmit the transmission block again, so that the single transmission block is transmitted twice repeatedly. That is, one transmission block is repeatedly transmitted in multiple time slots, enabling the terminal to combine data repeatedly transmitted in the multiple time slots respectively, thereby obtaining a repetition gain. Theoretically, repeating transmission twice can provide a repetition gain of 3 dB. Assuming that one transmission block is transmitted in one time slot without considering multi-slot transmission, if one transmission block needs to be repeatedly transmitted multiple times, the transmission block can be repeatedly transmitted in multiple time slots. That is, the transmission block is transmitted once in each of the multiple time slots. For example, the multiple time slots are consecutive.

It should be understood that the multi-slot transmission and repetition transmission described above may be applied in combination or separately. In the case of combined application, assuming that the number of time slots required for multi-slot transmission is denoted as N, and the number of repetitions is denoted as H, then one transmission block needs to occupy N*H time slots. The N*H time slots may be multiple consecutive time slots. In addition, the number and position of OFDM symbols corresponding to the transmission block in the N*H time slots are the same. Furthermore, N*H does not exceed the maximum number of repetitions supported by the terminal.

When the base station determines that coverage enhancement for downlink data is required, the base station may generate second indication information, which is configured to indicate the repetition number of the downlink data and/or the number of time slots for transmitting the downlink data, wherein the number of time slots is greater than or equal to 2. The repetition number of the downlink data corresponds to the repetition transmission included in the coverage enhancement described above; that is, the downlink data is repeatedly transmitted multiple times, so that the downlink data appears once in each of multiple consecutive time slots. For example, the base station sends the downlink data to the terminal once in time slot 1 and sends the downlink data to the terminal again in time slot 2, so that the terminal can receive the downlink data once in time slot 1 and receive the downlink data again in time slot 2, ensuring that the terminal has multiple chances to receive the downlink data. It should be understood that if repetition of the downlink data is not needed, the base station does not need to repeatedly send the downlink data in consecutive time slots. If repetition of the downlink data is needed, the base station needs to send the downlink data repeatedly at least twice in at least two consecutive time slots. Therefore, the term "repetition" in the repetition number inherently means at least two times. The number of time slots for transmitting the downlink data corresponds to the multi-slot transmission included in the coverage enhancement described above; that is, the downlink data can be divided into multiple parts, and different parts are transmitted in different time slots, so that multiple time slots are used to transmit the same downlink data. For example, the downlink data is divided into a first part and a second part, wherein the first part is transmitted in a first time slot and the second part is transmitted in a second time slot, and the first time slot and the second time slot are two adjacent time slots. In addition, since the multi-slot transmission and repetition transmission included in coverage enhancement can be applied either in combination or separately, the second indication information is used to indicate the repetition number of the downlink data and/or the number of time slots for transmitting the downlink data, wherein the number of time slots is greater than or equal to 2. In the present embodiment, the base station may decide to perform coverage enhancement on the downlink data by multi-slot transmission and/or repetition transmission. Therefore, it need to indicate the specific manner used for coverage enhancement by the base station to the terminal through the second indication information.

S103. Sending the second indication information to the terminal.

For example, after generating the second indication information, the base station sends the second indication information to the terminal. Specifically, the base station may send the second indication information to the terminal via Downlink Control Information (DCI), or via Radio Resource Control (RRC) parameters, or via a combination of DCI and RRC. That is to say, the second indication information may be carried in DCI and/or RRC parameters. It should be understood that DCI and/or RRC parameters are not exclusively used to carry the second indication information, but additionally carry the second indication information while maintaining their respective existing functions. A detailed description of specific carrying manners will be provided in subsequent embodiments.

Since the second indication information is configured to indicate the repetition number of downlink data and/or the number of time slots for transmitting the downlink data, the terminal may determine, according to the second indication information, in which time slots to receive the downlink data, and thus receive the downlink data in the corresponding time slots.

S104. Sending the downlink data to the terminal according to the repetition number of the downlink data and/or the number of time slots for transmitting the downlink data.

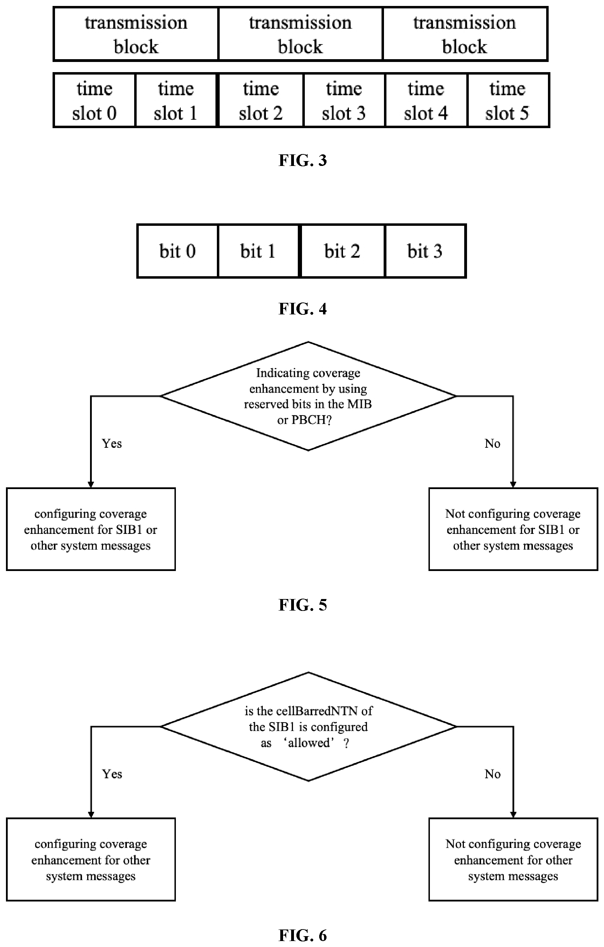

For example, the base station performs coverage enhancement by using a combination of multi-slot transmission and repetition transmission. The number of time slots required for multi-slot transmission is N, and the number of repetition transmissions is H. Therefore, the second indication information is configured to indicate both the repetition number of the downlink data and the number of time slots for transmitting the downlink data, wherein the repetition number of the downlink data is H and the number of time slots for transmitting the downlink data is N. In this case, the base station needs to send the downlink data over N*H time slots. Assuming that the downlink data is carried in a transmission block, the base station needs to send the transmission block over N consecutive time slots, and the transmission block is repeatedly transmitted H times. Taking N=2 and H=3 as an example, as shown in FIG. 3, one transmission block is transmitted in two time slots and repeated three times. The base station sends the first part of the transmission block in time slot 0, the second part in time slot 1, the first part again in time slot 2, the second part again in time slot 3, the first part again in time slot 4, and the second part again in time slot 5.

In the embodiments of the present disclosure, a base station sends first indication information to a terminal to indicate whether the terminal performs coverage enhancement. When coverage enhancement is required, the base station generates second indication information to indicate a repetition number of downlink data and/or a number of time slots for transmitting the downlink data, wherein the number of time slots is greater than or equal to 2. The repetition number of downlink data enables the base station to transmit the downlink data repeatedly multiple times, and the number of time slots for transmitting the downlink data enables the same downlink data to be transmitted in multiple time slots. Further, the base station sends the second indication information to the terminal, and transmits the downlink data to the terminal according to the repetition number of the downlink data and/or the number of time slots for transmitting the downlink data, so that the downlink data is transmitted repeatedly multiple times and/or the same downlink data is transmitted in multiple time slots. When the terminal determines that coverage enhancement is needed according to the first indication information, the terminal receives the downlink data from time slots based on the repetition number of the downlink data and/or the number of time slots for transmitting the downlink data indicated in the second indication information. Since the same downlink data is transmitted in multiple time slots, i.e., different parts of the downlink data are transmitted on different time slots, the demodulation performance of the terminal for the downlink data is improved by reducing the code rate, thereby helping to improve the transmission efficiency of the downlink data. In addition, the base station transmits the downlink data repeatedly multiple times, so that the terminal combines multiple repeated downlink data received on different time slots, which improves the success rate of the terminal in receiving the downlink data, avoids transmission delay caused by retransmission, and improves the downlink data transmission efficiency of the satellite communication system.

In addition, in scenarios where satellite payload is limited, in the present embodiment, by transmitting a single transmission block over multiple time slots, the code rate of data transmission can be reduced through a coverage enhancement design without modifying the MCS table, thereby improving data transmission efficiency.

In the present embodiment, the first indication information may be sent to the terminal in multiple ways.

In a feasible implementation, sending the first indication information to the terminal includes: sending a synchronization signal block to the terminal, wherein the master information block or the physical broadcast channel in the synchronization signal block is configured to carry the first indication information.

For example, the base station 22 may send a Synchronization Signaling Block (SSB) to the terminal 21. The SSB includes a Primary Synchronization Signal (PSS), a Secondary Synchronization Signal (SSS), and a Physical Broadcast Channel (PBCH). The PBCH may be used to carry a Master Information Block (MIB) message. The base station 22 may carry the first indication information in the MIB or the PBCH. For example, the first indication information is carried by reserved bits in the MIB or PBCH, to notify the terminal whether downlink coverage enhancement is required. Accordingly, when the terminal 21 receives the information carried in the MIB or PBCH, the terminal 21 obtains the first indication information according to the reserved bits and determines whether coverage enhancement is configured.

For example, the base station may carry the first indication information by using one reserved bit in the MIB, or the base station may add one new bit in the MIB to carry the first indication information. For instance, when the value of the bit is 1, it indicates that coverage enhancement is required; when the value of the bit is 0, it indicates that coverage enhancement is not required.

As another example, the base station may carry the first indication information by using one reserved bit in the PBCH, or the base station may add one new bit in the PBCH to carry the first indication information. For instance, when the value of the bit is 1, it indicates that coverage enhancement is required; when the value of the bit is 0, it indicates that coverage enhancement is not required.

In another feasible implementation, sending the first indication information to the terminal includes: sending a first system information block to the terminal, wherein the first system information block is configured to carry the first indication information.

For example, the base station 22 may send a first system information block to the terminal 21. The first system information block may specifically be System Information Block 1 (SIB1). The base station 22 carries the first indication information by using the cell Barred Non-Terrestrial Network (cellBarredNTN) field in SIB1. For instance, if cellBarredNTN in SIB1 is configured as allowed, it indicates that coverage enhancement is required; otherwise, it indicates that coverage enhancement is not required.

In yet another feasible implementation, sending the first indication information to the terminal includes: sending the first indication information to the terminal, wherein the first indication information is determined by whether a second system information block is sent to the terminal. If the second system information block is sent to the terminal, it indicates that coverage enhancement is required. Specifically, the base station 22 may send a second system information block to the terminal 21. The second system information block may specifically be System Information Block 19 (SIB19). The first indication information is determined by whether the base station 22 sends SIB19 to the terminal 21. For example, when the base station 22 sends SIB19 to the terminal 21, it indicates that downlink coverage enhancement is required. When the base station 22 does not send SIB19 to the terminal 21, it indicates that downlink coverage enhancement is not required. In other words, when the base station 22 sends SIB19 to the terminal 21, coverage enhancement is required.When the base station 22 does not send SIB19 to the terminal 21, coverage enhancement is not required. Accordingly, the terminal 21 may determine whether coverage enhancement is configured by whether SIB19 is received. For example, if the terminal 21 receives SIB19, it determines that coverage enhancement is configured. If the terminal 21 does not receive SIB19, it determines that coverage enhancement is not configured.

For example, generating the second indication information includes multiple implementation manners. Several feasible implementation manners are described below.

In a feasible implementation, generating the second indication information includes: adding the second indication information to downlink control information.

For example, the base station may add the second indication information to Downlink Control Information (DCI).

For example, adding the second indication information to the downlink control information includes: representing the second indication information by using reserved bits of the downlink control information; or, representing the second indication information by using newly added bits of the downlink control information; or, representing the second indication information by multiplexing existing bits of the downlink control information.

For example, the base station may represent the second indication information by using reserved bits in DCI, or the base station may add new bits to DCI and then represent the second indication information by using the new bits. Alternatively, the base station may also multiplex existing bits in DCI to represent the second indication information. For instance, there are 4 reserved bits in DCI, and the 4 reserved bits correspond to 16 different values, each value corresponding to one meaning, so that the 16 different values can represent 16 different meanings.

For example, the base station indicates the repetition number of downlink data by using 2, 3, or 4 reserved bits or newly added bits in DCI. Specifically, the manner of indicating the repetition number by using 2 bits may be the correspondence shown in Table 1 or Table 2 below, the manner of indicating the repetition number by using 3 bits may be the correspondence shown in Table 3 below, and the manner of indicating the repetition number by using 4 bits may be the correspondence shown in Table 4 below.

**Table 1**

| repetition number indication | repetition number |
|---|---|
| 00 | 1 |
| 01 | 2 |
| 10 | 4 |
| 11 | 8 |

**Table 2**

| repetition number indication | repetition number |
|---|---|
| 00 | 1 |
| 01 | 2 |
| 10 | 4 |
| 11 | 8 |

**Table 3**

| repetition number indication | repetition number |
|---|---|
| 000 | 1 |
| 001 | 2 |
| 010 | 3 |
| 011 | 4 |
| 100 | 7 |
| 101 | 8 |
| 110 | 12 |
| 111 | 16 |

**Table 4**

| repetition number indication | repetition number |
|---|---|
| 0000 | 1 |
| 0001 | 2 |
| 0010 | 3 |
| 0011 | 4 |
| 0100 | 7 |
| 0101 | 8 |
| 0110 | 12 |
| 0111 | 16 |
| 1000 | 20 |
| 1001 | 24 |
| 1010 | 28 |
| 1011 | 32 |
| 1100 | Reserved |
| 1101 | Reserved |
| 1110 | Reserved |
| 1111 | Reserved |

Furthermore, the base station may also indicate the number of time slots for transmitting the downlink data (denoted as the number of TBoMS time slots) by using 2, 3, or 4 reserved bits or newly added bits in DCI. For the specific indication method, reference may be made to Tables 1 to 4 described above, and details are not repeated here. It can be understood that the bits in DCI used to indicate the repetition number of downlink data and the bits used to indicate the number of TBoMS time slots are independent of each other. In addition, the number of bits in DCI used to indicate the repetition number of downlink data and the number of bits used to indicate the number of TBoMS time slots may be the same or different. For example, the number of bits used to indicate the repetition number of downlink data is 2 bits, and the number of bits used to indicate the number of TBoMS time slots is 3 bits.

In a feasible implementation, generating the second indication information includes: adding the second indication information to radio resource control parameters.

For example, the base station may add the second indication information to Radio Resource Control (RRC) parameters. Specifically, the base station may define a new RRC parameter to indicate the second indication information, or extend values of an existing RRC parameter to indicate the second indication information.

In another feasible implementation, generating the second indication information includes: adding the second indication information to downlink control information and radio resource control parameters; the radio resource control parameters include a plurality of first values and/or a plurality of second values, the downlink control information includes a first index value and/or a second index value, a first value corresponding to the first index value among the plurality of first values indicates the repetition number,and a second value corresponding to the second index value among the plurality of second values indicates the number of time slots.

For example, the base station may jointly use DCI and RRC parameters to indicate the second indication information. Since the second indication information includes the repetition number of downlink data and/or the number of time slots for transmitting the downlink data, several bits may be selected from the reserved bits of DCI to correspond to the repetition number of downlink data, and other several bits may be selected to correspond to the number of time slots for transmitting the downlink data. As shown in FIG. 4, the DCI includes four reserved bits: bit 0 and bit 1 together correspond to the repetition number of downlink data, and bit 2 and bit 3 together correspond to the number of time slots for transmitting the downlink data.

Taking bit 0 and bit 1 shown in FIG. 4 as an example, bit 0 and bit 1 have four different values in total, namely 00, 01, 10, and 11, each of which may be recorded as one first index value. Correspondingly, the RRC parameters include four values, such as 2, 4, 6, and 8, each of which is recorded as one first value. The multiple first index values are in one-to-one correspondence with the multiple first values, and the correspondence is shown in Table 5 below:

**Table 5**

| first index value | first value |
|---|---|
| 00 | 2 |
| 01 | 4 |
| 10 | 6 |
| 11 | 8 |

For example, in the present embodiment, the first index value may be used to indicate which first value in the RRC parameters is used to represent the repetition number of downlink data. For instance, the first index value 00 points to the first value 2 in the RRC parameters, indicating that the repetition number of downlink data is 2. The first index value 01 points to the first value 4 in the RRC parameters, indicating that the repetition number of downlink data is 4, and so on.

Similarly, taking bit 2 and bit 3 shown in FIG. 4 as an example,bit 2 and bit 3 have four different values in total, namely 00, 01, 10, and 11, each of which may be recorded as one second index value. Correspondingly, the RRC parameters include four values, such as 2, 3, 4, and 5, each of which is recorded as one second value. The plurality of the second index values are in one-to-one correspondence with the multiple second values, and the correspondence is shown in Table 6 below:

**Table 6**

| second index value | second value |
|---|---|
| 00 | 2 |
| 01 | 3 |
| 10 | 4 |
| 11 | 5 |

For example, in the present embodiment, the second index value may be used to indicate which second value in the RRC parameters is used to represent the number of time slots for transmitting the downlink data. For instance, the second index value 00 corresponds to the second value 2 in the RRC parameters, indicating that 2 time slots are used to transmit the same downlink data. The second index value 01 corresponds to the second value 3 in the RRC parameters, indicating that 3 time slots are used to transmit the same downlink data, and so on.

In an actual application scenario, the downlink data sent by the base station to the terminal may be data with different types, such as SIB1, other system messages, paging messages, Message 2 (Msg2), Message 4 (Msg4), and downlink data after the terminal accesses the base station. The downlink data with the data types are carried on the PDSCH. The scheduling information of the PDSCH is carried on the Physical Downlink Control Channel (PDCCH). Therefore, the terminal needs to monitor the PDCCH to obtain the PDSCH scheduling information carried by the PDCCH, and then monitor the PDSCH according to the PDSCH scheduling information, thereby obtaining the downlink data carried on the PDSCH. Since paging messages and Msg2 have a small number of bits and sufficient link budget, coverage enhancement is not required. Therefore, the present embodiment specifically introduces coverage enhancement for other downlink data except paging messages and Msg2.

For SIB1, the base station may carry the first indication information by using reserved bits in the MIB or PBCH for notifying the terminal whether coverage enhancement is required. If coverage enhancement is required, the base station further generates second indication information, which is used to indicate the repetition number of downlink data and/or the number of TBoMS time slots. Specifically, the base station may configure the repetition number and the number of TBoMS time slots in the reserved bits of DCI. The DCI may be DCI carried in the PDCCH corresponding to the PDSCH carrying SIB1, scrambled by System Information Radio Network Temporary Identity (SI-RNTI), with a DCI format of DCI format 1_0. For example, the DCI has 4 reserved bits, wherein 2 reserved bits are configured for the repetition number, and the remaining 2 bits are configured for the number of TBoMS time slots. When the terminal operates in the unlicensed spectrum of Frequency Range (FR) 1 or in FR2, the number of reserved bits in the DCI field is 17 bits; otherwise, the number of reserved bits is 15 bits. After using the coverage enhancement shown in the present embodiment, the number of reserved bits in the DCI field is reduced. The number of reserved bits after modification equals the current number of reserved bits minus the number of bits used for indicating the repetition number and the number of bits used for indicating the TBoMS time slots.

For other system messages, the base station may carry the first indication information by using reserved bits in the MIB or PBCH for notifying the terminal whether coverage enhancement is required. Alternatively, the base station may carry the first indication information by using the cellBarredNTN field in SIB1 to notify the terminal whether coverage enhancement is required. If coverage enhancement is required, the base station further generates second indication information, which is used to indicate the repetition number of downlink data and/or the number of TBoMS time slots. Specifically, the base station may configure the repetition number and the number of TBoMS time slots in the reserved bits of DCI. The DCI may be DCI carried in the PDCCH corresponding to the PDSCH carrying SIB1, scrambled by System Information Radio Network Temporary Identity (SI-RNTI), with a DCI format of DCI format 1_0. For example, the DCI has 4 reserved bits, wherein 2 reserved bits are configured for the repetition number, and the remaining 2 bits are configured for the number of TBoMS time slots. As shown in FIG. 5, the base station may notify the terminal whether coverage enhancement is required by using reserved bits in the MIB or PBCH. Specifically, the base station may determine whether to indicate coverage enhancement via the reserved bits in the MIB or PBCH. If determining to indicate coverage enhancement via the reserved bits in the MIB or PBCH, the base station configures coverage enhancement for SIB1 or other system messages, i.e., configures the repetition number and the number of TBoMS time slots. Otherwise, coverage enhancement for SIB1 or other system messages is not configured. Alternatively, as shown in FIG. 6, the base station may notify the terminal whether coverage enhancement is required by using the cellBarredNTN field in SIB1. Specifically, the base station may determine whether the cellBarredNTN field in SIB1 is configured as 'allowed'. If the cellBarredNTN field in SIB1 is configured as 'allowed', the base station configures coverage enhancement for other system messages, i.e., configures the repetition number and the number of TBoMS time slots. Otherwise, coverage enhancement for other system messages is not configured.

For Msg4, the base station may carry the second indication information via RRC parameters and/or DCI according to a repetition request sent by the terminal. For example, the base station may configure the repetition number and the number of TBoMS time slots via RRC parameters and/or DCI. For the specific configuration method, reference may be made to the method described in the foregoing embodiments, and details are not repeated here. For instance, the base station may indicate the repetition number and the number of TBoMS time slots by using reserved bits, newly added bits, or multiplexing existing bits in DCI. The DCI may be the one carried in the PDCCH corresponding to the PDSCH carrying Msg4, scrambled by Temporary Cell Radio Network Temporary Identity (TC-RNTI), with a DCI format of DCI format 1_0. As another example, the base station may jointly use RRC parameters and DCI to indicate the repetition number and the number of TBoMS time slots. For the specific joint method, reference may be made to the method described in the foregoing embodiments, and details are not repeated here. As a further example, the base station may directly use RRC parameters to indicate the repetition number and the number of TBoMS time slots.

For downlink data after the terminal accesses the base station, the base station may carry the second indication information via RRC parameters and/or DCI. For example, the base station may configure the repetition number and the number of TBoMS time slots via RRC parameters and/or DCI. For the specific configuration method, reference may be made to the method described in the foregoing embodiments, and details are not repeated here.

It can be understood that the base station first sends information carried in the PDCCH to the terminal. The information carried in the PDCCH includes scheduling information of the PDSCH, and the PDSCH carries SIB1. Therefore, in order to successfully receive SIB1, the terminal needs to monitor the PDCCH according to the monitoring occasions or monitoring windows indicated by the base station, then obtain the scheduling information of the PDSCH from the information carried in the PDCCH, and further monitor the PDSCH according to the scheduling information of the PDSCH, so as to obtain the SIB1 carried by the PDSCH. In addition, different SSBs correspond to different SIB1s, and the monitoring occasions or monitoring windows corresponding to different SSBs may be non-overlapping or partially overlapping. Since the repetition number of downlink data and/or the number of TBoMS time slots are introduced in the present disclosure, resource collision may occur for SIB1s corresponding to different SSBs. The following describes the overlapping degree of monitoring windows corresponding to different SSBs in the related art, and how to avoid resource collision of SIB1s corresponding to different SSBs after introducing the repetition number of downlink data and/or the number of TBoMS time slots in the present disclosure.

Current PDSCH is divided into PDSCH before access and PDSCH after access. PDSCH before access does not support repetition transmission, and the base station transmits information carried by the PDSCH within one slot. PDSCH after access supports repetition transmission, wherein the number of repetitions can be configured via RRC parameters, with a maximum of 8 repetitions supported. One cell supports time-division transmission of multiple SSBs. The PDCCH corresponding to SIB1 is mapped in the type 0-PDCCH common space. The specific time-frequency resource allocation is determined by the PDCCH-ConfigSIB1 IE, which includes configurations of CORESET#0 and search space#0, each of 4 bits, indicating the row index of the table used. The configuration of CORESET#0 includes the multiplexing pattern between CORESET0 and SS/PBCH Block, the number of consecutive resource blocks occupied by CORESET0, the number of consecutive OFDM symbols of CORESET0, and the offset (in RB) between the lower frequency bound of CORESET and the lower frequency bound of SSB. The configuration of search space#0 includes the values of parameters O and M (Pattern 1), the index of the first OFDM symbol of the search space, and the number of search spaces within each slot (Pattern 1).

New Radio (NR) supports three multiplexing patterns between CORESET0 and SS/PBCH Block.

Pattern 1 can be used for carrier frequencies below 6 GHz and above 6 GHz (and below 52.6 GHz), while Pattern 2 and Pattern 3 can be used for carrier frequencies above 6 GHz. For Pattern 1 (which applies exclusively in the present document unless otherwise specified), the Type 0-PDCCH CSS for one SSB is within a monitoring window comprising 2 time slots. The mapping relationship between the index i of an SSB and the first time slot n₀ of the corresponding monitoring window is given by Equation (3) below: ${n}_{0} = \left(O⋅{2}^{μ}+\left⌊i⋅M\right⌋\right) {modN}_{slot}^{frame , μ}$ where n₀ is the index of the first time slot of the monitoring window within one radio frame. When $\left⌊\left(O⋅{2}^{μ}+\left⌊i⋅M\right⌋\right)/{N}_{slot}^{frame , μ}\right⌋ mod 2 = 0$, it is mapped to the first radio frame in 20 ms, i.e., SFN_{c} mod2 = 0 (SFN_{c} is a system frame number which satisfies a certain condition); otherwise, it is mapped to the second radio frame. Parameter M in Table 7 below indicates the degree of overlap between the monitoring windows corresponding to SSB i and SSB i+1 respectively.

**Table 7: For FR1, the PDCCH monitoring occasion parameters for Pattern 1**

| **Index** | ***O*** | **number of search space set included in each time slot** | ***M*** | **index of the starting symbol** |
|---|---|---|---|---|
| 0 | 0 | 1 | 1 | 0 |
| 1 | 0 | 2 | 1/2 | {0, if *i* is even}, { ${N}_{symb}^{CORESET}$, if *i* is odd} |
| 2 | 2 | 1 | 1 | 0 |
| 3 | 2 | 2 | 1/2 | {0, if *i* is even}, { ${N}_{symb}^{CORESET}$, if *i* is odd} |
| 4 | 5 | 1 | 1 | 0 |
| 5 | 5 | 2 | 1/2 | {0, if *i* is even}, { ${N}_{symb}^{CORESET}$, if *i* is odd} |
| 6 | 7 | 1 | 1 | 0 |
| 7 | 7 | 2 | 1/2 | {0, if *i* is even}, { ${N}_{symb}^{CORESET}$, if *i* is odd} |
| 8 | 0 | 1 | 2 | 0 |
| 9 | 5 | 1 | 2 | 0 |
| 10 | 0 | 1 | 1 | 1 |
| 11 | 0 | 1 | 1 | 2 |
| 12 | 2 | 1 | 1 | 1 |
| 13 | 2 | 1 | 1 | 2 |
| 14 | 5 | 1 | 1 | 1 |
| 15 | 5 | 1 | 1 | 2 |

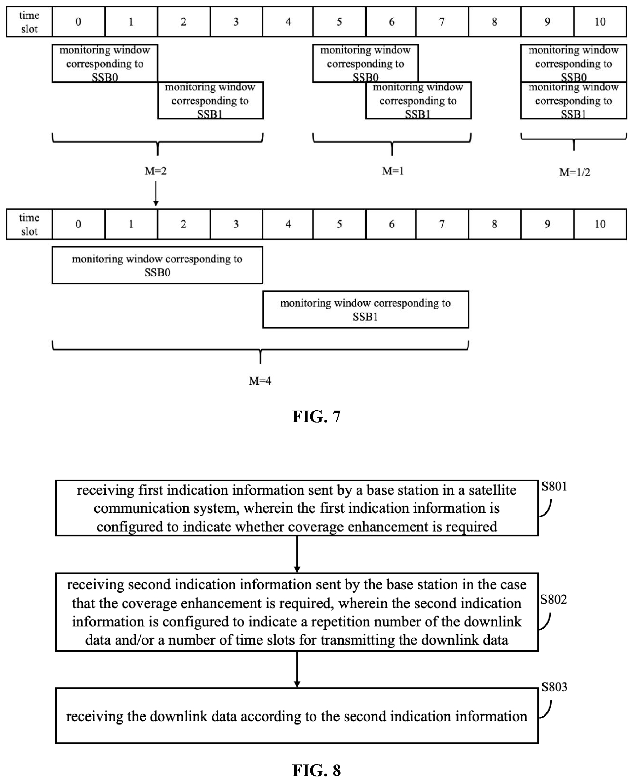

As shown in FIG. 7, when M=2, the monitoring window corresponding to SSBO and the monitoring window corresponding to SSB1 do not overlap at all. When M=1, the monitoring window corresponding to SSBO and the monitoring window corresponding to SSB1 overlap by one time slot. When M=1/2, the monitoring window corresponding to SSBO and the monitoring window corresponding to SSB1 overlap completely. The design of overlapping monitoring windows reduces the resource overhead of beam scanning to a certain extent. For the SSB index i, when µ = 0, 1, 2, 3, the two time slots of the monitoring window refer to time slot n₀ and time slot n₀ + 1; when µ = 4, the two time slots refer to time slot n₀ and time slot n₀ + 4; when µ = 5, the two time slots refer to time slot n₀ and time slot n₀ + 8. The present embodiment relates to the scenario with µ = 0, 1, 2, 3.

Assume that a subcarrier spacing of 30 kHz is used. Taking row indexes 0, 1, and 8 in Table 1 as examples, the time slots where the monitoring window corresponding to each SSB is located are shown in Table 8, Table 9, and Table 10 below.

**Table 8: the time slots where the monitoring window corresponding to each SSB is located (row index 0)**

| SSB index | 0 | 1 | 2 | 3 | 4 | 5 | 6 | 7 |
|---|---|---|---|---|---|---|---|---|
| index of the time slots where the monitoring window is located | 0,1 | 1,2 | 2,3 | 3,4 | 4,5 | 5,6 | 6,7 | 7,8 |

**Table 9: the time slots where the monitoring window corresponding to each SSB is located (row index 1)**

| SSB index | 0 | 1 | 2 | 3 | 4 | 5 | 6 | 7 |
|---|---|---|---|---|---|---|---|---|
| index of the time slots where the monitoring window is located | 0,1 | 0,1 | 1,2 | 1,2 | 2,3 | 2,3 | 3,4 | 3,4 |

**Table 10: the time slots where the monitoring window corresponding to each SSB is located (row index 8)**

| SSB index | 0 | 1 | 2 | 3 | 4 | 5 | 6 | 7 |
|---|---|---|---|---|---|---|---|---|
| index of the time slots where the monitoring window is located | 0,1 | 2,3 | 4,5 | 6,7 | 8,9 | 10,11 | 12,13 | 14,15 |

The time-domain resource allocation table configured by RRC for the PDSCH of SIB1 is shown in Table 11 below, wherein Type A indicates slot-based PDSCH mapping, Type B indicates non-slot-based PDSCH mapping, K0 is the downlink assignment timing (the interval between PDCCH and PDSCH in slots; 0 means PDCCH and PDSCH are in the same slot), S indicates the starting OFDM symbol index of the PDSCH, and L indicates the number of consecutive OFDM symbols occupied by the PDSCH.

**Table 11: SIB 1 PDSCH time-domain resource allocation table**

| **row index** | ***dmrs-TypeA-Position*** | **PDSCH mapping type** | ***K₀*** | ***S*** | ***L*** |
|---|---|---|---|---|---|
| 1 | 2 | Type A | 0 | 2 | 12 |
| | 3 | Type A | 0 | 3 | 11 |
| 2 | 2 | Type A | 0 | 2 | 10 |
| | 3 | Type A | 0 | 3 | 9 |
| 3 | 2 | Type A | 0 | 2 | 9 |
| | 3 | Type A | 0 | 3 | 8 |
| 4 | 2 | Type A | 0 | 2 | 7 |
| | 3 | Type A | 0 | 3 | 6 |
| 5 | 2 | Type A | 0 | 2 | 5 |
| | 3 | Type A | 0 | 3 | 4 |
| 6 | 2 | Type B | 0 | 9 | 4 |
| | 3 | Type B | 0 | 10 | 4 |
| 7 | 2 | Type B | 0 | 4 | 4 |
| | 3 | Type B | 0 | 6 | 4 |
| 8 | 2,3 | Type B | 0 | 5 | 7 |
| 9 | 2,3 | Type B | 0 | 5 | 2 |
| 10 | 2,3 | Type B | 0 | 9 | 2 |
| 11 | 2,3 | Type B | 0 | 12 | 2 |
| 12 | 2,3 | Type A | 0 | 1 | 13 |
| 13 | 2,3 | Type A | 0 | 1 | 6 |
| 14 | 2,3 | Type A | 0 | 2 | 4 |
| 15 | 2,3 | Type B | 0 | 4 | 7 |
| 16 | 2,3 | Type B | 0 | 8 | 4 |

As shown in Tables 8 to 10 above, the PDCCH for SIB1 corresponding to two adjacent SSBs may be transmitted in the same time slot or adjacent time slots. According to the value of K0 in Table 11, the PDCCH and corresponding PDSCH are located in the same time slot. If coverage enhancement for SIB1 is performed according to the coverage enhancement described in the present embodiment, resource collision may occur for SIB1 corresponding to different SSBs.

For example, take M=2 as shown in FIG. 7. Since the base station transmits one transmission block in one time slot, the base station may transmit the SIB1 corresponding to SSB0 in time slot 0 or time slot 1, and the terminal monitors the PDCCH corresponding to SSB0 in time slot 0 or time slot 1. Similarly, the base station may transmit the SIB1 corresponding to SSB1 in time slot 2 or time slot 3, and the terminal monitors the PDCCH corresponding to SSB1 in time slot 2 or time slot 3. It can be understood that, in FIG. 7 with M=2 as an example, although the monitoring window corresponding to SSB0 includes time slot 0 and time slot 1, the monitoring window means that the terminal may monitor the PDCCH corresponding to SSB0 within a range of two time slots. If the base station transmits the SIB1 corresponding to SSB0 in time slot 0, the terminal monitors the PDCCH corresponding to SSB0 in time slot 0; if the base station transmits the SIB1 corresponding to SSB0 in time slot 1, the terminal monitors the PDCCH corresponding to SSB0 in time slot 1. Specifically, the base station may send a notification message to the terminal in advance, wherein the notification message is used to indicate the time slot corresponding to the SIB1. Alternatively, the base station and the terminal may predefine the time slot corresponding to the SIB1. Alternatively, the base station may send to the terminal a row index of a certain row in Table 7, which is usually carried in the MIB, so that the terminal uses the row index as an index to look up Table 7 and thus determine the PDCCH monitoring occasion corresponding to the row index, wherein the PDCCH monitoring occasion is the time slot corresponding to the SIB1. Similarly, as shown in FIG. 7 with M=2 as an example, although the monitoring window corresponding to SSB1 includes time slot 2 and time slot 3, the monitoring window means that the terminal may monitor the PDCCH corresponding to SSB1 within a range of two time slots.

Since the present disclosure introduces the repetition number of downlink data and/or the number of time slots for transmitting the downlink data, wherein the number of time slots is greater than or equal to 2, when the downlink data is SIB1, the SIB1 may occupy multiple time slots. For example, assuming the repetition number of SIB1 is 4 and the same SIB1 occupies 1 time slot, the base station needs to transmit the SIB1 in 4 time slots. As shown in FIG. 7, the base station transmits the SIB1 corresponding to SSB0 in time slot 0, time slot 1, time slot 2, and time slot 3, with one repetition of the SIB1 corresponding to SSB0 in each time slot, which is equivalent to the base station transmitting the SIB1 corresponding to SSB0 four times consecutively. Therefore, the monitoring window corresponding to SSB0 includes time slot 0, time slot 1, time slot 2, and time slot 3. Similarly, when the base station transmits the SIB1 corresponding to SSB1 to the terminal, it also needs to occupy similar 4 time slots. If the 4 time slots overlap with the 4 time slots, for example, time slot 0, time slot 1, time slot 2, time slot 3, resource collision may occur between the SIB1 corresponding to SSB0 and SSB1 respectively. Therefore, to avoid such resource collision, the method according to the present embodiment further includes: sending, by the base station, monitoring occasions of the physical downlink control channel to the terminal, wherein the monitoring occasions are related to the repetition number of the downlink data and/or the number of time slots for transmitting the downlink data. For example, the base station may send to the terminal in advance the monitoring occasions of the PDCCH corresponding to different SSBs. As shown in FIG. 7, for M=2, when coverage enhancement is required, it can be changed to the mode of M=4. That is, the base station may send to the terminal in advance that the monitoring occasion of the PDCCH corresponding to SSB0 starts from time slot 0,and/or send to the terminal in advance that the monitoring occasion of the PDCCH corresponding to SSB1 starts from time slot 4. In the way, resource collision between the SIB1 corresponding to SSB0 and SSB1 respectively can be avoided. It can be understood that, for the cases of M=1 or M=1/2 in FIG. 7, when coverage enhancement is required, a similar method can be adopted to avoid resource collision of the SIB1 corresponding to different SSBs respectively.

It can be understood that, before the base station sends the PDCCH monitoring occasions corresponding to different SSBs to the terminal, the base station has known that the monitoring occasions are related to the repetition number of the downlink data and/or the number of time slots for transmitting the downlink data. For example, in the case of M=4 in FIG. 7, according to the repetition number of the downlink data (e.g., 4) and the number of time slots for transmitting the downlink data (e.g., 1), it can be known that the starting time slots of the PDCCH monitoring occasions corresponding to different SSBs need to be separated by at least 4 time slots. Therefore, the PDCCH monitoring occasion corresponding to SSB0 starts from time slot 0, and the PDCCH monitoring occasion corresponding to SSB1 starts from time slot 4. Specifically, when coverage enhancement is required, one implementation for the base station to send the PDCCH monitoring occasions corresponding to different SSBs to the terminal is that the base station sends a row index of a certain row in Table 12 below to the terminal and the terminal uses the row index as an index to look up Table 12 and thereby determine the PDCCH monitoring occasion corresponding to the row index. In other words, when the terminal obtains a row index from the MIB, the terminal first needs to determine whether coverage enhancement is required. If coverage enhancement is not required, the terminal looks up the PDCCH monitoring occasion from Table 7 according to the row index. If coverage enhancement is required, the terminal looks up the PDCCH monitoring occasion from Table 12 according to the row index. That is to say, Table 12 below is a reference table of PDCCH monitoring occasions configured for coverage enhancement in the present embodiment, and the reference table is known to both the base station and the terminal.

**Table 12: For FR1, PDCCH monitoring occasion parameters for Pattern 1**

| **Index** | ***O*** | **number of search space set included in each time slot** | ***M*** | **Index of the starting symbol** |
|---|---|---|---|---|
| 0 | 0 | 1 | 4 | 0 |
| 1 | 0 | 1 | 8 | 0 |
| 2 | 0 | 1 | 4 | 1 |
| 3 | 0 | 1 | 8 | 1 |
| 4 | 2 | 1 | 4 | 0 |
| 5 | 2 | 1 | 8 | 0 |
| 6 | 2 | 1 | 4 | 1 |
| 7 | 2 | 1 | 8 | 1 |
| 8 | 5 | 1 | 4 | 0 |
| 9 | 5 | 1 | 8 | 0 |
| 10 | 7 | 1 | 4 | 0 |
| 11 | 7 | 1 | 8 | 0 |
| 12 | 0 | 1 | 16 | 0 |
| 13 | 0 | 1 | 16 | 0 |
| 14 | 2 | 1 | 32 | 0 |
| 15 | 2 | 1 | 32 | 0 |

FIG. 8 is a flowchart of a method for transmitting downlink data provided by another embodiment of the present disclosure. The method in the present embodiment may be executed by a terminal. The detailed steps of the method are as follows:
S801: Receiving first indication information sent by a base station in a satellite communication system, wherein the first indication information is used to indicate whether coverage enhancement is required.

For example, the terminal may receive the first indication information sent by the base station, wherein the first indication information is used to indicate whether coverage enhancement is required. The specific indication manner may refer to the method described in the foregoing embodiments, and details are not repeated here.

S802: Receiving second indication information sent by the base station when the coverage enhancement is required, wherein the second indication information is used to indicate a repetition number of the downlink data and/or a number of time slots for transmitting the downlink data, and the number of time slots is greater than or equal to 2.

When the coverage enhancement is required, the base station further generates the second indication information and sends the second indication information to the terminal. Correspondingly, the terminal receives the second indication information, wherein the second indication information is used to indicate the repetition number of the downlink data and/or the number of time slots for transmitting the downlink data. The specific indication manner may refer to the method described in the foregoing embodiments, and details are not repeated here. It can be understood that when coverage enhancement is not required, the terminal does not need to perform S802 as described above and S803 as follows. In this case, the terminal takes a row index of a certain row in Table 7 sent by the base station as an index, and looks up Table 7 by using the index to determine a PDCCH monitoring occasion corresponding to the row index, monitors the PDCCH at the monitoring occasion to obtain scheduling information of the PDSCH carried by the PDCCH, and further monitors the PDSCH according to the scheduling information of the PDSCH to obtain the downlink data carried by the PDSCH.

S803: Receiving the downlink data according to the second indication information.

After generating the second indication information, the base station transmits the downlink data to the terminal according to the repetition number of the downlink data and/or the number of time slots for transmitting the downlink data included in the second indication information. Therefore, after receiving the second indication information, the terminal can receive the downlink data according to the second indication information.

For example, receiving the downlink data according to the second indication information includes: determining multiple time slots corresponding to the downlink data according to the repetition number of the downlink data and/or the number of time slots for transmitting the downlink data; receiving the downlink data in the multiple time slots. For example, the time slots used for repetitively transmitting the downlink data are consecutive.

For example, if the number of time slots required for multi-slot transmission is N and the number of repetitions is H, the base station needs to transmit the downlink data over N*H time slots. Assuming that the downlink data is carried in a transmission block, the base station transmits the transmission block over N consecutive time slots, and the transmission block is repeatedly transmitted H times. Taking N=2 and H=3 as an example, as shown in FIG. 3, one transmission block is transmitted over two time slots and repeated 3 times. The base station transmits the first part of the transmission block in time slot 0, the second part in time slot 1, the first part again in time slot 2, the second part again in time slot 3, the first part again in time slot 4, and the second part again in time slot 5. Accordingly, the terminal receives the first part of the transmission block in time slot 0, the second part in time slot 1, the first part again in time slot 2, the second part again in time slot 3, the first part again in time slot 4, and the second part again in time slot 5.

For example, when the downlink data is SIB1, the base station sends a row index of a certain row in Table 12 to the terminal, so that the terminal can look up the row corresponding to the index in Table 12 as described above to determine the PDCCH monitoring occasion. The terminal monitors the PDCCH at the PDCCH monitoring occasion, obtains the repetition number and/or the number of TBoMS time slots from the DCI carried by the PDCCH, further determines multiple time slots according to the repetition number and/or the number of TBoMS time slots, and receives SIB1 in the multiple time slots. If no coverage enhancement is applied to SIB1, the terminal only receives SIB1 in one time slot.

For other system messages, if the terminal determines that coverage enhancement is required according to the cellBarredNTN field in SIB1, the terminal further obtains the repetition number and/or the number of TBoMS time slots from the DCI carried by the PDCCH, then determines multiple time slots according to the repetition number and/or the number of TBoMS time slots, and receives other system messages in the multiple time slots. If no coverage enhancement is applied to other system messages, the terminal only receives other system messages in one time slot.

For Msg4, if the terminal has reported a repetition request to the base station, the terminal obtains the repetition number and/or the number of TBoMS time slots from the DCI carried by the PDCCH. Further, the terminal determines multiple time slots according to the repetition number and/or the number of TBoMS time slots, and receives Msg4 in the multiple time slots. If no coverage enhancement is applied to Msg4, the terminal only receives Msg4 in one time slot.

For downlink data after the terminal accesses the base station, the terminal may obtain the repetition number and/or the number of TBoMS time slots from the DCI carried by the PDCCH. Further, the terminal determines multiple time slots according to the repetition number and/or the number of TBoMS time slots, and receives such downlink data in the multiple time slots. If no coverage enhancement is applied to such downlink data, the terminal only receives such downlink data in one time slot.

In the present embodiment, the base station sends first indication information to the terminal to indicate whether the terminal perform coverage enhancement. If coverage enhancement is required, the base station generates second indication information to indicate the repetition number of downlink data and/or the number of time slots for transmitting the downlink data, wherein the number of time slots is greater than or equal to 2. The repetition number of downlink data allows the base station to transmit the downlink data multiple times, and the number of time slots for transmitting the downlink data allows the same downlink data to be transmitted in multiple time slots. Furthermore, the base station sends the second indication information to the terminal, and transmits the downlink data to the terminal according to the repetition number of the downlink data and/or the number of time slots for transmitting the downlink data, so that the downlink data is repeated multiple times and/or the same downlink data is transmitted in multiple time slots. When the terminal determines that coverage enhancement is needed according to the first indication information, the terminal receives the downlink data from the corresponding time slots based on the repetition number of the downlink data and/or the number of time slots for transmitting the downlink data indicated in the second indication information. Since the same downlink data is transmitted in multiple time slots, i.e., different parts of the downlink data are transmitted in different time slots, the demodulation performance of the terminal for the downlink data is improved by reducing the code rate, thereby helping to improve the transmission efficiency of the downlink data. In addition, the base station transmits the downlink data multiple times, so that the terminal can combine multiple repetitions of the downlink data received in different time slots, which improves the success rate of the terminal in receiving the downlink data, avoids transmission delay caused by retransmission, and enhances the downlink data transmission efficiency of the satellite communication system.

For example, the method further includes: monitoring a physical downlink control channel according to a monitoring occasion notified by the base station, wherein the monitoring occasion is determined according to the repetition number of the downlink data and/or the number of time slots for transmitting the downlink data.

For example, the base station first sends information carried by the PDCCH to the terminal, and then sends information carried by the PDSCH to the terminal, wherein the PDSCH carries SIB. Before the base station sends the information carried by the PDCCH to the terminal, the base station needs to notify the terminal of the PDCCH monitoring occasion, so that the terminal monitors the PDCCH at the monitoring occasion. Specifically, if coverage enhancement is not required, the base station may send a row index of a certain row in Table 7 to the terminal. The row index is usually carried in the MIB, so that the terminal uses the row index as an index to look up Table 7 and thus determine the PDCCH monitoring occasion corresponding to the row index. If coverage enhancement is required, the base station may send a row index of a certain row in Table 12 to the terminal, so that the terminal uses the row index as an index to look up Table 12 and thus determine the PDCCH monitoring occasion corresponding to the row index. In other words, when the terminal obtains a row index from the MIB, it first needs to determine whether coverage enhancement is required. If coverage enhancement is not required, the terminal looks up the PDCCH monitoring occasion from Table 7 according to the row index. If coverage enhancement is required, the terminal looks up the PDCCH monitoring occasion from Table 12 according to the row index. The rule may be a rule predefined by the terminal and the base station, or a rule preconfigured by the base station to the terminal. In addition, when the base station sends the row index used for looking up the PDCCH monitoring occasion to the terminal, the base station may take into account the repetition number of downlink data and/or the number of time slots for transmitting the downlink data, or may not take into account the repetition number of downlink data and/or the number of time slots for transmitting the downlink data. Theoretically, it is sufficient that the PDCCH monitoring occasion corresponding to the row index sent by the base station to the terminal can avoid resource collision of SIB1 corresponding to different SSBs.

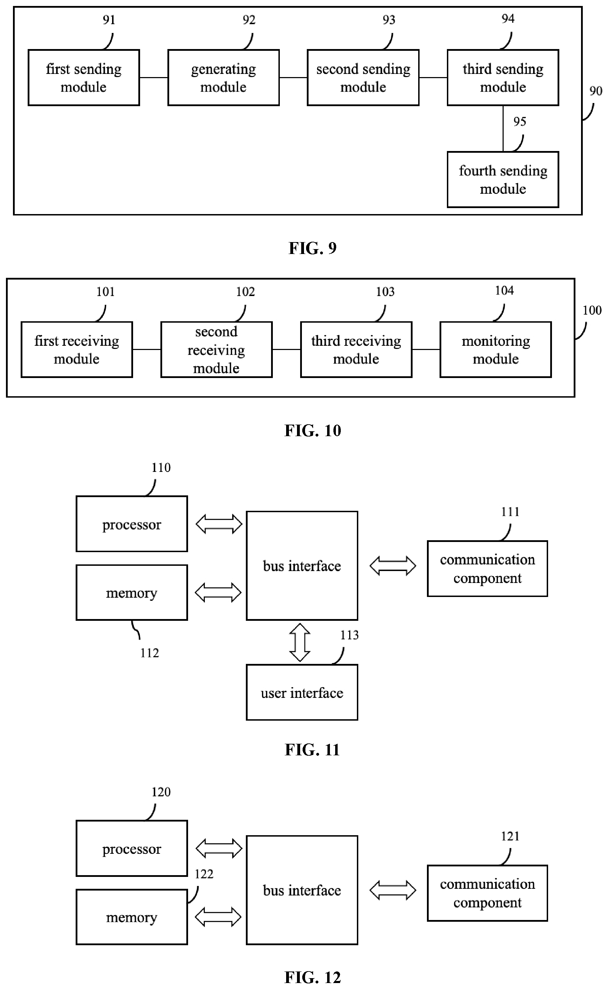

FIG. 9 is a schematic structural diagram of an apparatus for transmitting downlink data provided by an embodiment of the present disclosure. The apparatus for transmitting downlink data may be configured in the base station as described above. The apparatus for transmitting downlink data provided by the embodiment of the present disclosure can execute the processing flow provided by the embodiment of the method for transmitting downlink data.

As shown in FIG. 9, the apparatus 90 for transmitting downlink data includes:
a first sending module 91, configured to send first indication information to a terminal, wherein the first indication information is configured to indicate whether coverage enhancement is required;
a generating module 92, configured to generate second indication information in the case that the coverage enhancement is required, wherein the second indication information is used to indicate a repetition number of the downlink data and/or a number of time slots for transmitting the downlink data, and the number of time slots is greater than or equal to 2;
a second sending module 93, configured to send the second indication information to the terminal;
a third sending module 94, configured to send the downlink data to the terminal according to the repetition number of the downlink data and/or the number of time slots for transmitting the downlink data.

For example, when the first sending module 91 sends the first indication information to the terminal, the first sending module 91 is specifically configured to:
send a synchronization signal block to the terminal, wherein the master information block or physical broadcast channel in the synchronization signal block is configured to carry the first indication information; or
send a first system information block to the terminal, wherein the first system information block is configured to carry the first indication information; or
send a second system information block to the terminal, wherein the second system information block is configured to indicate that coverage enhancement is required.

For example, the second sending module 93 is specifically configured to:
send downlink control information to the terminal, wherein the downlink control information includes the second indication information; or
Send radio resource control parameters to the terminal, wherein the radio resource control parameters include the second indication information.

For example, the second indication information is indicated by reserved bits in the downlink control information; or, the second indication information is indicated by newly added bits in the downlink control information; or, the second indication information is indicated by multiplexing existing bits in the downlink control information.

For example, the second sending module 93 is specifically configured to: send the second indication information through the downlink control information and the radio resource control parameters; the radio resource control parameters include a plurality of first values and/or a plurality of second values, the downlink control information includes a first index value and/or a second index value, the first value indexed by the first index value indicates the repetition number in the second indication information, and the second value indexed by the second index value indicates the number of time slots in the second indication information.

For example, the apparatus 90 for transmitting downlink data further includes: a fourth sending module 95, configured to send the monitoring occasion of the downlink data to the terminal.

The apparatus for transmitting downlink data in the embodiment shown in FIG. 9 can be used to implement the technical solutions of the foregoing method embodiments, and thhe implementation principle and technical effect are similar, and details are not described herein again.

FIG. 10 is a schematic structural diagram of a apparatus for transmitting downlink data provided by an embodiment of the present disclosure. The apparatus for transmitting downlink data may be configured in the terminal as described above. The apparatus for transmitting downlink data provided by an embodiment of the present disclosure can execute the processing flow provided by the embodiment of the method for transmitting downlink data. As shown in FIG. 10, the apparatus for transmitting downlink data 100 includes:
a first receiving module 101, configured to receive first indication information sent by a base station in a satellite communication system, wherein the first indication information is configured to indicate whether coverage enhancement is required;
a second receiving module 102, configured to receive second indication information sent by the base station in the case that the coverage enhancement is required, wherein the second indication information is configured to indicate a repetition number of the downlink data and/or a number of time slots for transmitting the downlink data, and the number of time slots is greater than or equal to 2;
a third receiving module 103, configured to receive the downlink data according to the second indication information.

For example, when the third receiving module 103 receives the downlink data according to the second indication information, the third receiving module 103 is specifically configured to: determine multiple time slots corresponding to the downlink data according to the repetition number of the downlink data and/or the number of time slots for transmitting the downlink data; receive the downlink data in the multiple time slots.

For example, the time slots used for repetitively transmitting the downlink data are consecutive.

For example, the apparatus for transmitting downlink data 100 further includes a monitoring module 104, configured to monitor a physical downlink control channel according to a monitoring occasion of the downlink data notified by the base station, and obtain the downlink data from the physical downlink control channel.

The apparatus for transmitting downlink data in the embodiment shown in FIG. 10 can be used to implement the technical solutions of the foregoing method embodiments, and the implementation principles and technical effects are similar, and details are not described herein again.

FIG. 11 is a schematic structural diagram of a terminal provided by an embodiment of the present disclosure. As shown in FIG. 11, the terminal includes a processor 110, a communication component 111, a memory 112, and a user interface 113. A computer program is stored in the memory 112 and configured to be executed by the processor 110 to perform the method steps on the terminal side as described above.

The communication component is configured to receive and transmit data under the control of the processor.

In FIG. 11, the bus architecture may include any number of interconnected buses and bridges, which link together various circuits of one or more processors represented by the processor and a memory represented by the memory. The bus architecture may also link various other circuits such as peripheral devices, voltage regulators, and power management circuits, which are well known in the art, and thus will not be further described herein. A bus interface provides an interface. The communication component 111 may be a plurality of elements, including a transmitter and a receiver, and provides a unit for communicating with various other apparatuses over transmission media including wireless channels, wired channels, optical cables, and the like. For different user equipment, the user interface may also be an interface capable of connecting externally or internally to required devices, including but not limited to a keypad, a display, a speaker, a microphone, a joystick, and the like.

The processor 110 is responsible for managing the bus architecture and general processing, and the memory 112 may store data used by the processor 110 when performing operations.

For example, the processor 110 may be a CPU (Central Processing Unit), an ASIC (Application Specific Integrated Circuit), an FPGA (Field-Programmable Gate Array), or a CPLD (Complex Programmable Logic Device). The processor 110 may also adopt a multi-core architecture.

The processor 110 is configured to execute any one of the methods provided by the embodiments of the present application according to the obtained executable instructions by invoking a program stored in the memory 112. The processor 110 and the memory 112 may also be physically arranged separately.

In addition, an embodiment of the present disclosure further provides a base station. As shown in FIG. 12, the base station includes a processor 120, a communication interface 121, and a memory 122. The memory 122 stores a computer program configured to be executed by the processor 120 to perform the method for transmitting the downlink data on the base station side as described above.

The communication interface 121 is configured to receive and transmit data under the control of the processor 120.

In FIG. 12, the bus architecture may include any number of interconnected buses and bridges, which link together various circuits of one or more processors represented by the processor and a memory represented by the memory. The bus architecture may also link various other circuits such as peripheral devices, voltage regulators, and power management circuits, which are well known in the art, and thus will not be further described herein. A bus interface provides an interface. The communication interface 121 may include a plurality of elements, i.e., a transmitter and a receiver, providing a unit for communicating with various other apparatuses over transmission media including wireless channels, wired channels, optical cables, and the like. The processor is responsible for managing the bus architecture and general processing, and the memory 122 may store data used by the processor 120 when performing operations.

The processor 120 may be a Central Processing Unit (CPU), an Application Specific Integrated Circuit (ASIC), a Field-Programmable Gate Array (FPGA), or a Complex Programmable Logic Device (CPLD). The processor may also adopt a multi-core architecture.

In addition, an embodiment of the present disclosure further provides a computer-readable storage medium having stored thereon a computer program that, when executed by a processor, implements the method for transmitting thhe downlink data according to the above embodiments.

It should be noted that relational terms such as "first" and "second" are used herein to distinguish one entity or operation from another, and do not necessarily require or imply any actual such relationship or order between these entities or operations. Moreover, the terms "include", "comprise", or any other variation thereof are intended to cover a non-exclusive inclusion, such that a process, method, article, or apparatus that includes a list of elements includes not only those elements but also other elements not explicitly listed, or elements inherent to such process, method, article, or apparatus. Without further limitation, an element defined by the phrase "including a..." does not exclude the presence of other identical elements in the process, method, article, or apparatus that includes the element.

The above are merely specific embodiments of the present disclosure, enabling those skilled in the art to understand or implement the present disclosure. Various modifications to these embodiments will be readily apparent to those skilled in the art, and the general principles defined herein may be implemented in other embodiments without departing from the spirit or scope of the present disclosure. Therefore, the present disclosure will not be limited to the embodiments described herein, but is to be accorded the widest scope consistent with the principles and novel features disclosed herein.

## Claims

1. A method for transmitting downlink data, **characterized by** comprising:
sending first indication information to a terminal, wherein the first indication information is configured to indicate whether coverage enhancement is required;
generating second indication information in the case that the coverage enhancement is required, wherein the second indication information is configured to indicate a repetition number of the downlink data and/or a number of time slots for transmitting the downlink data, the number of time slots being greater than or equal to 2;
sending the second indication information to the terminal;
sending the downlink data to the terminal according to the repetition number of the downlink data and/or the number of time slots for transmitting the downlink data.

2. The method according to claim 1, **characterized in that** sending the first indication information to a terminal comprises:
sending a synchronization signal block to the terminal, wherein a master information block or a physical broadcast channel in the synchronization signal block is configured to carry the first indication information; or
sending a first system information block to the terminal, wherein the first system information block is configured to carry the first indication information; or
sending a second system information block to the terminal, wherein the second system information block is configured to indicate that coverage enhancement is required.

3. The method according to claim 1, **characterized in that** sending the second indication information to the terminal comprises:
sending downlink control information to the terminal, wherein the downlink control information comprises the second indication information; or
sending radio resource control parameters to the terminal, wherein the radio resource control parameters comprise the second indication information.

4. The method according to claim 3, **characterized in that**
the second indication information is indicated by reserved bits of the downlink control information; or
the second indication information is indicated by newly added bits of the downlink control information; or
the second indication information is indicated by multiplexing existing bits of the downlink control information.

5. The method according to claim 1, **characterized in that** sending the second indication information to the terminal comprises:
sending the second indication information through downlink control information and radio resource control parameters; wherein the radio resource control parameters comprise a plurality of first values and/or a plurality of second values, the downlink control information comprises a first index value and/or a second index value, the first value indexed by the first index value indicates the repetition number in the second indication information, and the second value indexed by the second index value indicates the number of time slots in the second indication information.

6. The method according to claim 1, **characterized in that** the method further comprises:
sending a monitoring occasion of the downlink data to the terminal.

7. A method for transmitting downlink data, **characterized by** comprising:
receiving first indication information sent by a base station in a satellite communication system, wherein the first indication information is configured to indicate whether coverage enhancement is required;
receiving second indication information sent by the base station in the case that the coverage enhancement is required, wherein the second indication information is configured to indicate a repetition number of the downlink data and/or a number of time slots for transmitting the downlink data, the number of time slots being greater than or equal to 2;
receiving the downlink data according to the second indication information.

8. The method according to claim 7, **characterized in that** receiving the downlink data according to the second indication information comprises:
determining a plurality of time slots corresponding to the downlink data according to the repetition number of the downlink data and/or the number of time slots for transmitting the downlink data;
receiving the downlink data on the plurality of time slots.

9. The method according to claim 8, **characterized in that** the time slots for repetitively transmitting the downlink data are consecutive.

10. The method according to claim 7, **characterized in that** the method further comprises:
monitoring a physical downlink control channel according to a monitoring occasion of the downlink data notified by the base station, and obtaining the downlink data from the physical downlink control channel.

11. An apparatus for transmitting downlink data, **characterized by** comprising:
a first sending module, configured to send first indication information to a terminal, wherein the first indication information is configured to indicate whether coverage enhancement is required;
a generating module, configured to generate second indication information in the case that the coverage enhancement is required, wherein the second indication information is configured to indicate a repetition number of the downlink data and/or a number of time slots for transmitting the downlink data, the number of time slots being greater than or equal to 2;
a second sending module, configured to send the second indication information to the terminal;
a third sending module, configured to send the downlink data to the terminal according to the repetition number of the downlink data and/or the number of time slots for transmitting the downlink data.

12. An apparatus for transmitting downlink data, **characterized by** comprising:
a first receiving module, configured to receive first indication information sent by a base station in a satellite communication system, wherein the first indication information is configured to indicate whether coverage enhancement is required;
a second receiving module, configured to receive second indication information sent by the base station in the case that the coverage enhancement is required, wherein the second indication information is configured to indicate a repetition number of the downlink data and/or a number of time slots for transmitting the downlink data, the number of time slots being greater than or equal to 2;
a third receiving module, configured to receive the downlink data according to the second indication information.

13. A base station, **characterized by** comprising:
a memory;
a processor;
a computer program; and
a communication interface;
wherein the computer program is stored in the memory and configured to be executed by the processor to execute:
sending, via the communication interface, first indication information to a terminal, wherein the first indication information is configured to indicate whether coverage enhancement is required;
generating second indication information in the case that the coverage enhancement is required, wherein the second indication information is configured to indicate a repetition number of the downlink data and/or a number of time slots for transmitting the downlink data, the number of time slots being greater than or equal to 2;
sending, via the communication interface, the second indication information to the terminal;
sending, via the communication interface, the downlink data to the terminal according to the repetition number of the downlink data and/or the number of time slots for transmitting the downlink data.

14. The base station according to claim 13, **characterized in that** the processor is configured to:
send a synchronization signal block to the terminal, wherein a master information block or a physical broadcast channel in the synchronization signal block is configured to carry the first indication information; or
send a first system information block to the terminal, wherein the first system information block is configured to carry the first indication information; or
send a second system information block to the terminal, wherein the second system information block is configured to indicate that coverage enhancement is required.

15. The base station according to claim 13, **characterized in that** the processor is configured to:
send downlink control information to the terminal, wherein the downlink control information comprises the second indication information; or
send radio resource control parameters to the terminal, wherein the radio resource control parameters comprise the second indication information.

16. The base station according to claim 15, **characterized in that** the processor is configured to:
indicate the second indication information by reserved bits of the downlink control information; or
indicate the second indication information by newly added bits of the downlink control information; or
indicate the second indication information by multiplexing existing bits of the downlink control information.

17. The base station according to claim 13, **characterized in that** the processor is configured to:
send the second indication information through downlink control information and radio resource control parameters; wherein the radio resource control parameters comprise a plurality of first values and/or a plurality of second values, and the downlink control information comprises a first index value and/or a second index value; the first value indexed by the first index value indicates the repetition number in the second indication information, and the second value indexed by the second index value indicates the number of time slots in the second indication information.

18. The base station according to claim 13, **characterized in that** the processor is further configured to:
send a monitoring occasion of the downlink data to the terminal.

19. A terminal, **characterized by** comprising:
a memory;
a processor;
a computer program; and
a communication component;
wherein the computer program is stored in the memory and configured to be executed by the processor to execute:
receiving, via the communication component, first indication information sent by a base station in a satellite communication system, wherein the first indication information is configured to indicate whether coverage enhancement is required;
receiving, via the communication component, second indication information sent by the base station in the case that the coverage enhancement is required, wherein the second indication information is configured to indicate a repetition number of downlink data and/or a number of time slots for transmitting the downlink data, the number of time slots being greater than or equal to 2;
receiving, via the communication component, the downlink data according to the second indication information.

20. The terminal according to claim 19, **characterized in that** the processor is configured to:
determine a plurality of time slots corresponding to the downlink data according to the repetition number of the downlink data and/or the number of time slots for transmitting the downlink data;
receive the downlink data on the plurality of time slots via the communication component.

21. The terminal according to claim 19, **characterized in that** the processor is further configured to:
monitor a physical downlink control channel according to a monitoring occasion of the downlink data notified by the base station, and obtain the downlink data from the physical downlink control channel.

22. A computer-readable storage medium, **characterized in that** the computer-readable storage medium stores a computer program, wherein the computer program, when executed by a processor, implements the method according to any one of claims 1 to 10.
